# EUROPEAN PATENT SPECIFICATION

(11) **EP 0 883 959 B1**
(45) Date of publication and mention of the grant of the patent: **03.12.2003**
(21) Application number: 97903482.4
(22) Date of filing: 14.02.1997
(51) Int. Cl.: H04M 3/40, G10L 21/00

(54) **APPARATUS AND METHOD OF IMPROVING THE QULALITY OF SPEECH SIGNALS TRANSMITTED OVER A TELECOMMUNICATIONS SYSTEM**
VORRICHTUNG UND VERFAHREN ZUR VERBESSERUNG DER QUALITÄT VON ÜBER EIN TELEKOMMUNIKATIONSSYSTEM ÜBERTRAGENE SPRACHE
DISPOSITIF ET PROCEDE POUR L'AMELIORATION DE LA LANGUE PARLEE A L'AIDE D'UN SYSTEME DE TELECOMMUNICATIONS

(30) Priority: 29.02.1996 EP 96301392; 29.02.1996 GB 9604339
(43) Date of publication of application: 16.12.1998
(73) Proprietor: BRITISH TELECOMMUNICATIONS public limited company, London EC1A 7AJ (GB)
(72) Inventor: HOLLIER, Michael, Peter, Ipswich, Suffolk IP5 7XX (GB)
(74) Representative: Lidbetter, Timothy Guy Edwin
(86) International application number: GB9700432
(87) International publication number: WO97032430

(56) References cited:
- EP-A- 0 298 621
- EP-A- 0 489 543
- WO-A-96/06496
- GB-A- 2 258 936
- US-A- 5 148 488
- IEEE PACIFIC RIM CONFERENCE ON COMMUNICATIONS, COMPUTERS, AND SIGNAL PROCESSING, 17 - 19 May 1995, VICTORIA(CA), pages 575-580, XP000573143 H.KAMATA ET AL: "reconstruction of human voice using parallel structure transfer function and its estimation error"
- ICASSP-89-1989 INTERNATIONAL CONFERENCE ON ACOUSTICS, SPEECH, AND SIGNAL PROCESSING, vol. 1, 23 - 26 May 1989, GLASGOW(SCOTLAND), pages 207-210, XP000089702 T.F.QUATIERI ET AL: "PHASE COHERENCE IN SPEECH RECONSTRUCTION FOR ENHANCEMENT AND CODING APPLICATIONS"
- PATENT ABSTRACTS OF JAPAN vol. 18, no. 100 (P-1695), 17 February 1994 & JP 05 297899 A (NIPPON TELEGR & TELEPH CORP), 12 November 1993,

## Description

This invention relates to telecommunications systems, and is concerned in particular with improving the quality of speech signals transmitted over telecommunications networks.

Signals carried over telecommunications networks are subject to degradation from interference, attenuation, data compression, packet loss, limitations in digitisation processes and other problems. It is desirable to monitor signals at intermediate points in their transmission paths to identify any imperfections and, if possible, to "repair", the signal; that is, to restore the signal to its original state. The "repaired" signal can then be retransmitted. The process can be repeated as often as necessary, according to the length of the transmission path and the degree of degradation, provided that at each stage the signal has not degraded to the point where it is no longer possible to discern its original content.

Data signals are comparatively easy to repair as they comprise a limited number of characters: (e.g. binary 1s and 0s; the twelve-character DTMF (dual tone multiple frequency) system, or the various QAM (quadrature amplitude modulation) constellations. Repair of such signals can be carried out by identifying which of the "permitted" characters is closest to the degraded one actually received, and transmitting that character. For example, in a binary system, any signal value exceeding a threshold value may be interpreted as a "1 ", and any below the threshold as a "0". Check digits and other means may be included in the transmission to further improve the integrity of the transmission.

However, in general speech signals do not have a limited character set of this kind, and it is thus more difficult to identify automatically whether the signal has been degraded at all, still less how to restore the original signal.

In a public switched telecommunications system inter-operability requires that all parts of the system work compatibly. In general this precludes complex coding processes, at least at the interfaces between one operator's system and another's.

In certain specialised applications speech signals can be transmitted as a series of coefficients from a linear predictive coding (LPC) process, a process which models the excitation of a human vocal tract. These coefficients, when applied to a vocal-tract emulating filter, can reproduce the original speech. An example is described in US Patent 4742550 (Fette). Such a system is used, for example, in the speech codecs (coder/decoders) used in the air interface of mobile telephone systemsin order to reduce the required bandwidth. However, the transmission of speech in this form requires that specialised equipment is present at both transmission and receiving locations, (e.g. the mobile telephone and radio base station) and is thus not suitable for general use in a public switched telecommunications network.

A number of prior-art systems are known which are arranged to identify certain characteristics of acoustic or signal-distorting noise, and eliminate such characteristics. An example is disclosed in US Patent 5148488 (Chen), in which the speech-like characteristics of the incoming signal are estimated and used to generate a Kalman filter. This filter is then applied to the signal, allowing only the speech-like properties of the received signal to pass. However, such systems merely remove unspeechlike parts of the signal. If parts of the signal have been lost, or have been distorted to unspeechlike forms, they can do nothing to restore them.

According to a first aspect of the invention there is provided a method of restoring a degraded speech signal received over a telecommunications system to an estimation of its original form, comprising the steps of:
analysing the signal to identify parameters indicative of the speech content of the signal;
regenerating a speech signal from the parameters so identified; and
applying the resulting speech signal to an input of the communications system.

According to a second aspect of this invention there is provided an apparatus for restoring a degraded speech signal received over a telecommunications system, to an estimation of its original form, the apparatus comprising:
means for analysing the signal to identify parameters indicative of the speech content of the signal; and
means for regenerating a speech signal from the parameters so identified.

In one embodiment of the invention the method comprises the steps of:
applying to an output of the communications system a recognition process in which the speech elements of the incoming signal are estimated;
synthesising a speech signal having said estimated speech elements; and
adapting the macro-properties of the speech elements in the synthesised signal so that the properties of the adapted synthesised signal match those of the output signal.

The term 'macro-properties' is used in this specification to mean the properties of each speech element which vary between talkers, as distinct from the "microstructure", which determines the individual phonemes being spoken.

Preferably in this embodiment the durations, glottal excitation characteristics and/or pitches of individual speech elements in the estimated signal are adapted to match those in the output signal.

In an alternative, preferred, embodiment the signal is analysed according to a spectral representation model to generate output parameters, and a signal is generated derived from the output parameters. Preferably the spectral representation model is a vocal tract model, and the regeneration of a speech signal is made using a vocal tract model. Preferably the regeneration model includes temporal characteristics of the regenerated signal which are constrained to be speech-like.

The invention, in a further aspect, also extends to a telecommunications system having one or more interfaces with further telecommunications systems, in which each interface is provided with such apparatus for analysing and restoring signals entering and/or leaving the system.

Embodiments of the invention will now be described, by way of example only, with reference to the accompanying drawings, in which:
Figure 1 shows a telecommunications network incorporating the invention;
Figure 2 shows a speech regeneration unit according to a first embodiment of the invention, illustrating the manner in which an estimated "original signal" is regenerated from a degraded input signal;
Figure 3 illustrates a matching technique forming part of the process employed by the embodiment of Figure 2; and
Figure 4 shows a speech regeneration unit according to a second embodiment of the invention.

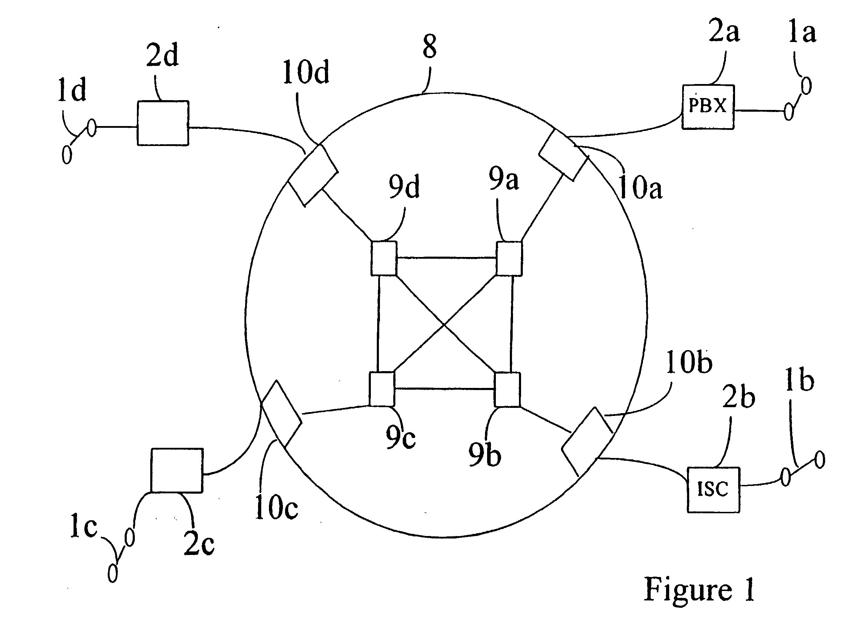

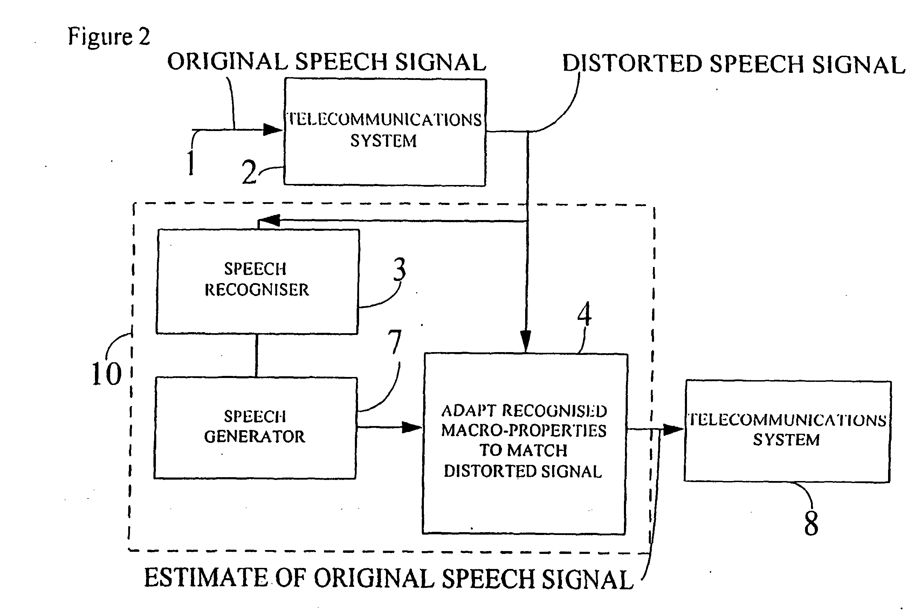

A description of the functional blocks in Figures 1 and 2 is given below, and includes references to established examples of each process.

Figure 1 illustrates a generalised telecommunications system 8 comprising a number of interconnected switches 9a, 9b, 9c, 9d, and interfacing with a number of other systems 2a, 2b, 2c, 2d. As shown illustratively in Figure 2 these may be private systems, connected to the system 8 through a private branch exchange (PBX) 2a, international networks connected to the system 8 by way of an International Switching Centre (ISC) 2b, another operator's public network 2c, or another part 2d of the same operator's network. Speech signals generated at respective sour ces 1a, 1b, 1c, 1d may be corrupted by the systems 2a, 2b, 2c, 2d. Speech signals entering or leaving the system 8 from or to the other systems 2a, 2b, 2c, 2d are passed through respective speech regenerators 10a, 10b, 10c, 10d. As shown, an individual operator may choose to "ring fence" his system 8 so that any signal entering the system 8 from another system 2a, 2b, 2c is repaired at the first opportunity, and any degradations to a signal are removed before it leaves the system. In a large network further speech regenerators (such as regenerator 10d) may be located within the network, thereby subdividing one operator's network into several smaller networks, 2d, 8, connected by such speech repair units.

The system to be described only handles speech signals. If the system is to be capable of handling data (e.g. facsimile) signals as well, separate means (not shown) would be necessary to identify the type of signal and apply different restoration processes, if any, to each type. Speech/data discriminators are well known in the art. For example DCME (digital circuit multiplication equipment), which uses speech compression, is provided with means for identifying the tonal signature of a facsimile transmission, and signals the equipment to provide a clear (uncompressed) transmission channel. As already indicated, data restoration processes are commonplace in the art, and will not be described further herein.

Figure 2 shows the general arrangement of a speech regeneration unit 10, corresponding to any one of the units 10a, 10b, 10c, 10d in Figure 1. Similarly the signal input 1 and system 2 in Figure 2 correspond to any one of the inputs 1a, 1b, 1 c, 1 d and their respective systems 2a, 2b. 2c or 2d.

The signal input 1 provides the original speech material received by the first telecommunications system 2. This material may be transmitted over part of the system 2 in a digital form, but the signal to be analysed is an analogue signal. This analogue signal is a degraded form of the original analogue speech signal; the degradations being due to the factors referred to previously, including the digitisation process itself. The analogue speech signal is output from the system 2 to the speech regenerator 10. In the regenerator 10 the distorted speech signal is first passed to a speech recogniser 3 which classifies the distorted speech sound, to facilitate selection of an "original sound" file from a memory store of such files forming part of the recogniser 3.

In this specification the term "speech recognition" is used to mean the recognition of speech events from a speech signal waveform. In the area of speech technology, the use of machines to recognise speech has been the goal of engineers and scientists for many years. A variety of practical speech recognisers have appeared in the literature including description of; HMM (Hidden Markov Models) Cox 1990: [Wheddon C and Linggard R: "*Speech communication*", Speech and Language Processing, Chapman and Hall (1990)] fixed dimension classifiers (such as nearest neighbour, Gaussian mixtures, and multi-layer perception) [Woodland & Millar 1990: *ibid*], and neural arrays [Tattersall, Linford & Linggard 1990: *ibid*].

Most recognition systems consist of a feature extractor and a pattern matching process (classification) and can be either speaker-dependent or speaker-independent. Speaker-dependent recognisers are trained by the user with each of the words required for the particular application. Speaker-independent recognition systems have a prescribed vocabulary which cannot be changed [Wheddon C & Linggard R: "*Speech communication*", Speech and Language Processing, Chapman & Hall (1990)]. In both systems features are extracted from the acoustic signal which are passed to a classifier which determines which of the words in its vocabulary was spoken. Features are extracted using transform or digital filtering techniques to reduce the amount of data passed to the classifier. The resulting patterns are then warped in time to optimally align with the reference patterns [Sakoe H and Chibass: "*Dynamic programming algorithm optimisation for spoken word recognition*", IEEE Trans Acoust Speech and Signal Proc, 26 (1978)]. Statistical models such as hidden Markov models [Cox S J: "*Hidden Markov models for automatic speech recognition: theory and application*", BT Telecom Technol J, 6, No. 2 (1988)] are also widely used. Here a sequence of features is compared with a set of probabilistically defined word models. Feature extraction and pattern matching techniques may also be extended to cope with connected words [Bridle J S. Brown M D and Chamberlain R M: "*An algorithm for connected word recognition*", Automatic Speech Analysis and Recognition, Reidal Publishing Company (1984)] which is a far more complex task as the number of words is unknown and the boundaries between words cannot be easily determined in real time. This results in increased computation time [Atal B S and Rabiner L R: "*Speech research directions*", AT&T Technical Journal 65, Issue 5 (1986)] and a corresponding increase in hardware complexity.

Hidden Markov Models suitable for the present purpose are described in Baun L E, "*An Inequality and Associated Maximisation Technique in Statistical Estimation for Probabilistic Functions of Markov Processes*" Inequalities III, 1-8, 1972, or Cox S J, "*Hidden Markov Models For Automatic Speech Recognition: Theory and Application*", in "Speech and Language Processing" edited by Wheddon C and Linggard R, Chapman and Hall, ISBN 0 412 37800 0, 1990. The HMM represents known words as a set of feature vectors, and, for a given incoming word, calculates the *a posteriori* probability that its model will produce the observed set of feature vectors. A generic "original sound" file can then be selected from memory for the recognised word.

The "original sound" file so identified is then used to control a speech generator 7 to generate an audio signal corresponding to the sound to be produced. Thus the speech recogniser identifies which speech element was the most likely to have been present in the original signal, and the speech generator then produces an undistorted version of that speech element, from a store of such speech elements. The output thus consists only of speech-like elements. Provided that the signal received from the telecommunications system is not so corrupted that the speech recogniser 3 fails to identify the correct speech element, the output from the speech generator 7 should be purely the speech content of the original signal.

The macro properties of the synthesised speech generated by the generator 7 are now adapted in an adaptor 4 to those of the actual speech event. The adaptor 4 reproduces the characteristics of the original talker, specifically fundamental frequency (which reflects the dimensions of the individual's vocal tract), glottal excitation characteristics, which determine the tonal quality of the voice, and temporal warping, to fit the general template to the speed of delivery of the individual speech elements. This is to allow the general "original sound" file to be matched to the actual speech utterances, making the technique practically robust, and talker-independent. These characteristics are described in "*Mechanisms of Speech recognition*", W.A. Ainsworth, Pergamon Press, 1976.

The pitch (fundamental frequency) of the signal may be matched to that of the stored "original sound", by matching the fundamental frequency of each output element, or some other identifiable frequency, to that of the original voice signal so as to match the inflections of the original speaker's voice.

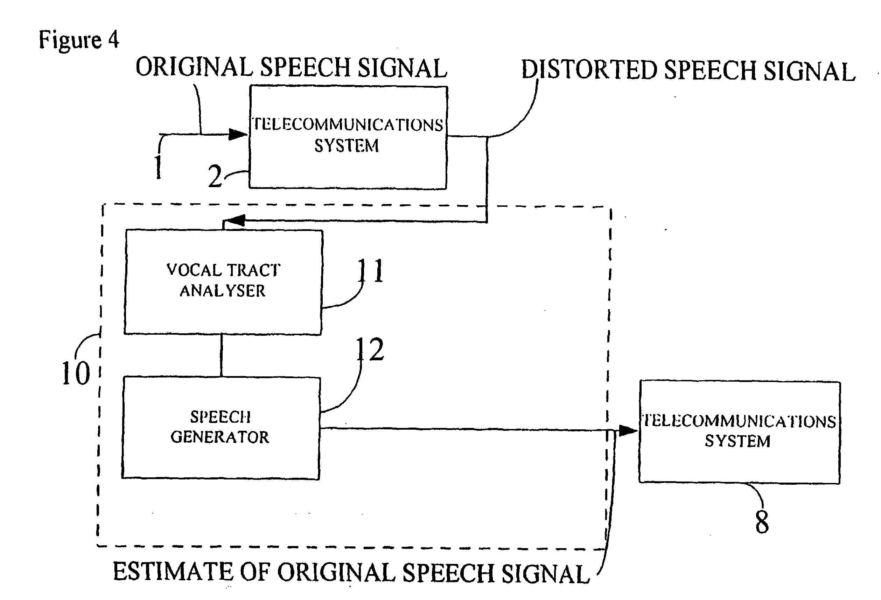

Glottal excitation characteristics can be produced algorithmically from analysis of the characteristics of the original signal, as described with reference to Figure 4.3 (page 36) of the Ainsworth reference cited above.

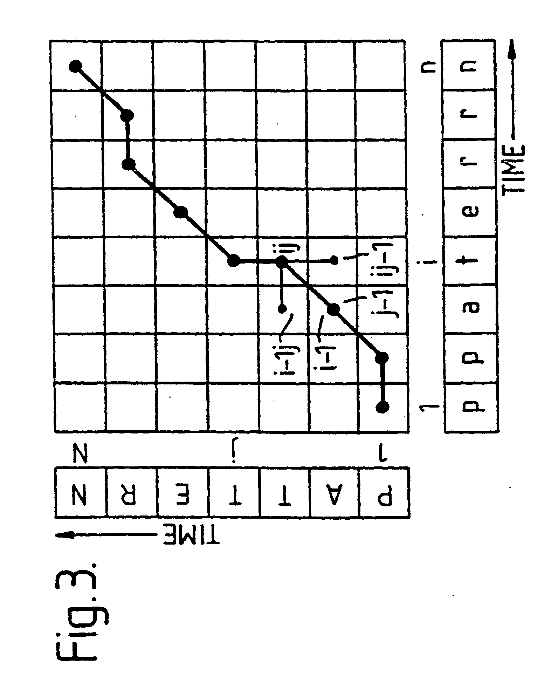

The mathematical technique used for time warping is described for example in Holmes J N, "*Speech Synthesis and Recognition*", Van Nostrand Reinhold (UK) Co. Ltd., ISBN 0 278 00013 4, 1988, and Bridle J S, Brown M D, Chamberlain R M, "*Continuous Connected Word Recognition Using Whole Word Templates*", Radio and Electronics Engineer 53, Pages 167-177, 1983. The time alignment path between the two words (uttered and recognised "original"), see Figure 3, describes the time warping required to fit the stored "original sound" to that of the detected word. Figure 3 shows, on the vertical axis, the elements of the recognised word "pattern", and on the horizontal axis the corresponding elements of the uttered word. It will be seen that the speaker's utterance differs from the word retrieved from the store in the length of certain elements and so, in order to match the original utterance certain elements, specifically the "p" and "r", are lengthened and others, specifically the "t", are shortened.

The regenerated signal is then. output to the telecommunications system 8.

Although the speech recogniser 3, speech generator 7 and adaptor 4 have been described as separate hardware, in practice they could be realised by a single suitably programmed digital processor.

The above system requires a large memory store of recognisable speech words or word elements, and will only reproduce a speech element if it recognises it from its stored samples. Thus any sound produced at the output of the telecommunications system 2 which is not matched with one stored in the memory will be rejected as not being speech, and not retransmitted. In this way, only events in the signal content recognised as being speech will be retransmitted, and non-speech events will be removed.

In a preferred embodiment, shown in Figure 4, the speech regeneration unit is made up of a vocal tract analysis unit 11, the output of which is fed to a vocal tract simulator 12 to generate a speech-like signal. This system has the advantage that non-speech-like parameters are removed from otherwise speech-like events, instead of each event being accepted or rejected in its entirety.

The vocal tract analysis system stores the characteristics of a generalised natural system (the human vocal tract) rather than a "library" of sounds producable by such a system. The preferred embodiment of Figure 4 therefore has the advantage over the embodiment of Figure 2 that it can reproduce any sound producable by a human vocal tract. This has the advantages that there is no need for a large memory store of possible sounds, nor the consequent processing time s involved in searching it. Moreover, the system is not limited to those sounds which have been stored.

It is appropriate here to briefly discuss the characteristics of vocal tract analysis systems. The vocal tract is a non-uniform acoustic tube which extends from the glottis to the lips and varies in shape as a function of time [Fant G C M, *"Acoustic Theory of Speech Production"*. Mouton and Co., 's-Gravehage, the Netherlands, 1960]. The major anatomical components causing the time varying change are the lips, jaws, tongue and velum. For ease of computation it is desirable that models for this system are both linear and time-invariant. Unfortunately, the human speech mechanism does not precisely satisfy either of these properties. Speech is a continually time varying-process. In addition, the glottis is not uncoupled from the . vocal tract, which results in non-linear characteristics [Flanagan J L "*Source-System Interactions in the Vocal. Tract*", Ann. New York Acad. Sci 155, 9-15, 1968]. However, by making reasonable assumptions, it is possible to develop linear time invariant models over short intervals of time for describing speech events [Markel J D, Gray A H, "*Linear Prediction of Speech*", Springer-Verlag Berlin Heidelberg New York, 1976]. Linear predictive codecs divide speech events into short time periods, or frames, and use past speech frames to generate a unique set of predictor parameters to represent the speech in a current frame [Atal B S, Hanauer S L "*Speech Analysis and Synthesis by Linear Prediction of the Speech Wave*" J. Acoust. Soc. Amer., vol. 50, pp. 637-655. 1971]. Linear predictive analysis has become a widely used method for estimating such speech parameters as pitch, formants and spectra. Auditory models (time/frequency/amplitude spectrograms) rely on audible features of the sound being monitored, and take no account of how they are produced, whereas a vocal tract model is capable of identifying whether the signal is speech-like, i.e. whether a real vocal tract could have produced it. Thus inaudible differences, not recognised by auditory models, will nevertheless be recognised by a vocal tract model.

A vocal tract model suitable for use in the analysis is the Linear Predictive Coding model as described in *Digital Processing of Speech Signals*: Rabiner L.R.; Schafer R.W; (Prentice-Hall 1978) page 396.

Enhancements of the vocal tract model may include the inclusion of permissible temporal characteristics, such as long-term pitch prediction, which allow the regeneration of speech components which are missing from a given speech structure, or so badly distorted that they fail to be recognised by the analysis process. The inclusion of such temporal characteristics would smooth out implausibly abrupt onsets, interruptions or ends of speech components, which may be caused, for example, by the brief loss or corruption of a signal.

The parameters generated by the vocal tract model 11 identify the speech-like characteristics of the original signal. Any characteristics which are not speech-like are unable to be modelled by the vocal tract model, and will therefore not be parameterised.

The parameters generated by the vocal tract model are used to control a speech production model 12. The parameters modify an excitation signal generated by the synthesiser, in accordance with the vocal tract parameters generated by the analyser 11, to generate a speech-like signal including the speech-like characteristics of the signal received from the system 2, but not the distortions.

Suitable vocal tract models for use in the synthesis include the Linear Predictive Coding model described above, or a more sophisticated model such as the cascade/parallel formant synthesiser, described in the Journal of the Acoustic Society of America (Vol 67, No3, March 1980): D.H. Klatt; "*Software for a Cascade*/*Parallel Formant Synthesiser*".

Other suitable systems are disclosed in "*Phase Coherence in Speech Reconstruction for Enhancement and Coding Applications*": Quatieri et al: International Conference on Acoustics, Speech, and Signal Processing, Vol 1 23-26 May 1989, Glasgow (Scotland): pages 207-210; and Kamata et al "*Reconstruction of Human Voice using Parallel Structure Transfer Function and its* Estimation *Error*": IEEE Pacific Rim Conference on Communications, Computers and Signal Processing; 17-19 May 1995 Victoria, British Columbia, Canada.

It should be understood that the term "speech", as used in this specification, is used to mean any utterance capable of production by the human voice, including singing, but does not necessarily imply that the utterance has any intelligible content.

## Claims

1. A method of restoring a degraded speech signal received over a telecommunications system to an estimation of its original form, comprising the steps of:
analysing the signal according to a spectral representation model to generate output parameters indicative of the speech content of the signal;
regenerating a speech signal derived from the output parameters so generated; and
applying the resulting speech signal to an input of the communications system.

2. A method according to claim 1 wherein the spectral representation is a vocal tract model.

3. A method according to claim 2, wherein the regeneration of a speech signal is made using a vocal tract model.

4. A method according to claim 1, 2 or 3, wherein the temporal characteristics of the regenerated signal are constrained to be speech-like.

5. An apparatus (10) for restoring a degraded speech signal, received over a telecommunications system (2) to an estimation of its original form, the apparatus comprising:
analysing means (11) for analysing the signal using a spectral representation to generate output parameters indicative of the speech content of the signal; and
means (12) for generating an output signal derived from the output parameters for regenerating the speech signal

6. Apparatus according to claim 5, wherein the spectral representation is a vocal tract model.

7. Apparatus according to claim 5 or 6, wherein the means (12) for regeneration of a speech signal is a vocal tract model.

8. Apparatus according to any of claims 5 6 or 7, wherein the means for regenerating the signal includes means for constraining the temporal characteristics of the regenerated signal to be speech-like.

9. A telecommunications system (8) having one or more interfaces with further telecommunications systems (2a, 2b, 2c, 2d), in which each interface is provided with apparatus (10) according to claim 11 or 12 for analysing and restoring signals entering the system and/or apparatus according to claims 11 or 12 for analysing and restoring signals leaving the system.

## Patentansprüche

1. Verfahren zur Wiederherstellung eines verschlechterten Sprachsignals, das über ein Telekommunikationssystem empfangen wird, hin zu einer Schätzung seiner ursprünglichen Form, das die folgenden Schritte umfasst:
Analysieren des Signals entsprechend einem spektralen Darstellungsmodell, um Ausgangsparameter zu erzeugen, die den Sprachinhalt des Signals anzeigen;
Wiedererzeugen eines Sprachsignals, das aus den so erzeugten Ausgangsparametern abgeleitet wird; und
Anlegen des resultierenden Sprachsignals an einen Eingang des Kommunikationssystems.

2. Verfahren nach Anspruch 1, bei dem die spektrale Darstellung ein Modell des Sprechapparates ist.

3. Verfahren nach Anspruch 2, bei dem die Wiedererzeugung des Sprachsignals mit einem Modell für den Sprechapparat durchgeführt wird.

4. Verfahren nach Anspruch 1, 2 oder 3, bei dem für dié zeitlichen Merkmale des wiedererzeugten Signals erzwungen wird, dass die sprachähnlich sind.

5. Vorrichtung (10) zur Wiederherstellung eines verschlechterten Sprachsignals, das über ein Telekommunikationssystem (2) empfangen wird, hin zu einer Schätzung seiner ursprünglichen Form, wobei die Vorrichtung folgendes umfasst:
eine Analyseeinrichtung (11) zum Analysieren des Signals unter Verwendung einer spektralen Darstellung, um Ausgangsparameter zu erzeugen, die den Sprachinhalt des Signals anzeigen; und
eine Einrichtung (12) zur Erzeugung eines Ausgangssignals, das aus den Ausgangsparametern zur Wiedererzeugung des Sprachsignals abgeleitet wird.

6. Vorrichtung nach Anspruch 5, bei der die spektrale Darstellung ein Modell des Sprechapparates ist.

7. Vorrichtung nach Anspruch 5 oder 6, bei der die Einrichtung (12) zur Wiedererzeugung des Sprachsignals ein Modell für den Sprechapparat ist.

8. Vorrichtung nach irgend einem der Ansprüche 5, 6 oder 7, bei der die Einrichtung zur Wiedererzeugung des Signals eine Einrichtung enthält, die erzwingt, dass die zeitlichen Merkmale des wiedererzeugten Signals sprachähnlich sind.

9. Telekommunikationssystem (8) mit einer oder mehreren Schnittstellen zu weiteren Telekommunikationssystemen (2a, 2, b, 2c, 2d), bei dem jede Schnittstelle mit einer Vorrichtung (10) nach Anspruch 11 oder 12 zur Analyse und Wiedererzeugung von Signalen, die in das System eingegeben werden, und/oder mit einer Vorrichtung nach Anspruch 11 oder 12 zur Analyse und Wiedererzeugung von Signalen, die das System verlassen, ausgestattet ist.

## Revendications

1. Procédé de reconstitution d'un signal vocal dégradé reçu sur un système de télécommunications en une estimation de sa forme d'origine, comprenant les étapes consistant à :
analyser le signal selon un modèle de représentation spectrale afin de générer des paramètres de sortie indicatifs du contenu vocal du signal,
régénérer un signal vocal déduit des paramètres de sortie ainsi générés, et
appliquer le signal vocal résultant à une entrée du système de communications.

2. Procédé selon la revendication 1, dans lequel la représentation spectrale est un modèle de l'appareil vocal.

3. Procédé selon la revendication 2, dans lequel la régénération d'un signal vocal est réalisée en utilisant un modèle d'appareil vocal.

4. Procédé selon la revendication 1, 2 ou 3, dans lequel les caractéristiques dans le temps du signal régénéré sont restreintes pour être de type vocal.

5. Dispositif (10) destiné à reconstituer un signal vocal dégradé, reçu sur un système de télécommunications (2) en une estimation de sa forme d'origine, le dispositif comprenant :
un moyen d'analyse (11) destiné à analyser le signal en utilisant une représentation spectrale afin de générer des paramètres de sortie indicatifs du contenu vocal du signal, et
un moyen (12) destiné à générer un signal de sortie déduit des paramètres de sortie afin de régénérer le signal vocal.

6. Dispositif selon la revendication 5, dans lequel la représentation spectrale est un modèle d'appareil vocal.

7. Dispositif selon la revendication 5 ou 6, dans lequel le moyen (12) destiné à la régénération d'un signal vocal est un modèle d'appareil vocal.

8. Dispositif selon l'une quelconque des revendications 5, 6 ou 7, dans lequel le moyen destiné à régénérer le signal comprend un moyen pour restreindre les caractéristiques dans le temps du signal régénéré pour être de type vocal.

9. Système de télécommunications (8) comportant une ou plusieurs interfaces avec d'autres systèmes de télécommunications (2a, 2b, 2c, 2d), dans lequel chaque interface est munie d'un appareil (10) selon la revendication 11 ou 12 destiné à analyser et à reconstituer des signaux entrant dans le système et/ou un dispositif selon les revendications 11 ou 12 destiné à analyser et à reconstituer des signaux quittant le système.
